# EUROPÄISCHE PATENTSCHRIFT

(11) **EP 3 589 501 B1**
(45) Veröffentlichungstag und Bekanntmachung des Hinweises auf die Patenterteilung: **26.05.2021**
(21) Anmeldenummer: 18703535.7
(22) Anmeldetag: 30.01.2018
(51) Int. Cl.: B60C 11/03, B60C 11/11, B60C 11/12

(54) **FAHRZEUGLUFTREIFEN**
PNEUMATIC VEHICLE TIRE
PNEUMATIQUE DE VÉHICULE

(30) Priorität: 28.02.2017 DE 102017203221
(43) Veröffentlichungstag der Anmeldung: 08.01.2020
(73) Patentinhaber: Continental Reifen Deutschland GmbH, 30165 Hannover (DE)
(72) Erfinder: SENG, Matthias, 30453 Hannover (DE); DIENSTHUBER, Franz, 60528 Frankfurt (DE); JACKSTADT, Michael, 30989 Gehrden (DE)
(74) Vertreter: Continental Corporation
(86) Internationale Anmeldenummer: PCT/EP2018/052212
(87) Internationale Veröffentlichungsnummer: WO 2018/158021

(56) Entgegenhaltungen:
- EP-A1- 0 648 622
- EP-A1- 2 803 501
- US-A1- 2003 205 305

## Beschreibung

### Fahrzeugluftreifen

Die Erfindung betrifft einen Fahrzeugluftreifen mit einem laufrichtungsgebunden ausgeführten Laufstreifen mit mittleren Profilblöcken im Laufstreifenmittelbereich und mit Schulterblöcken, welche Blöcke in Umfangsrichtung von über die Laufstreifenbreite V-förmig zueinander verlaufenden Schrägrillen begrenzt sind, welche mit den in Umfangsrichtung an sie angrenzenden mittleren Profilblöcken und Schulterblöcken jeweils einen Pitch bilden, wobei Pitches mit zumindest zwei unterschiedlichen Umfangslängen vorgesehen sind, wobei die mittleren Profilblöcke und die Schulterblöcke an der Laufstreifenperipherie zu den Schrägrillen jeweils durch zwei parallel zueinander verlaufende Blockkanten begrenzt sind und wobei die mittleren Profilblöcke und die Schulterblöcke mit Einschnitten versehen sind.

Ein Fahrzeugluftreifen der eingangs genannten Art ist beispielsweise aus DE 10 2011 055 916 A1 bekannt. In den mittleren Profilblöcken ist jeweils eine Vielzahl von in Draufsicht wellen- oder zickzack-förmig verlaufenden Einschnitten ausgebildet, welche die Profilblöcke durchqueren und unter einem Winkel zu den Blockkanten verlaufen. In den Schulterblöcken befinden sich je nach Pitchlänge zwei oder drei im Wesentlichen parallel zu den Blockkanten ausgerichtete Einschnitte.

**Die** US 2003/205305 A1 **offenbart einen Fahrzeugluftreifen mit einem laufrichtungsgebundenen, ausgeführten Laufstreifen mit mittleren Profilblöcken im Laufstreifenmittelbereich und mit Schulterblöcken, welche Blöcke in Umfangsrichtung von über die Laufstreifenbreite V-förmig zueinander verlaufenden Schrägrillen begrenzt sind, welche mit in Umfangsrichtung an sie angrenzenden mittleren Profilblöcken und Schulterblöcken jeweils einen Pitch bilden, wobei Pitches mit zumindest zwei unterschiedlichen Umfangsrillen vorgesehen sind, wobei die mittleren Profilblöcke und die Schulterblöcke in der Laufstreifenperipherie zu den Schrägrillen jeweils zu zwei parallel zueinander verlaufenden Blockkanten begrenzt sind und wobei die mittleren Profilblöcke und die Schulterblöcke mit Einschnitten versehen sind, wobei jeder mittlere Profilblock und jeder Schulterblock mit genau einem in Draufsicht parallel zu den Blockkanten verlaufenden und den mittleren Profilblock und dem Schulterblock durchquerenden Einschnitt versehen ist.**

Laufstreifen mit V-förmig zueinander verlaufenden Schrägrillen sind bekanntermaßen für die Wasserableiteigenschaften des Reifens von Vorteil. Es ist ferner bekannt, Blockprofile aufweisende Laufstreifen mit Einschnitten zu versehen, um die Fahreigenschaften unter winterlichen Fahrbedingungen sowie auf nasser Fahrbahn zu verbessern, wobei sich die Einschnitte in Draufsicht üblicherweise in Querrichtung oder unter einem von der Querrichtung um bis zu 40° abweichenden Winkel erstrecken. Pro Profilbock können mehrere Einschnitte oder auch nur ein einziger Einschnitt vorgesehen sein.

In Profilblöcken ausgebildete Einschnitte verringern die Steifigkeit der Profilblöcke und wirken sich daher auf das Deformationsverhalten der Profilblöcke unter Belastung aus, insbesondere auf deren "Kippverhalten" beim Bremsen und Beschleunigen (bei Traktion). Bei den bekannten Reifen der eingangs genannten Art ist das Kippverhalten der Profilblöcke im Hinblick auf die Bremseigenschaften und das Traktionsverhalten nicht optimal, da die Verbesserung einer dieser Eigenschaften meistens mit einer Verschlechterung der jeweils anderen Eigenschaft einhergeht.

Der Erfindung liegt daher die Aufgabe zugrunde, die Bremseigenschaften und das Traktionsverhalten bei einem Fahrzeugluftreifen der eingangs genannten Art zu verbessern.

Die gestellte Aufgabe wird erfindungsgemäß dadurch gelöst, dass jeder mittlere Profilblock und jeder Schulterblock mit genau einem in Draufsicht parallel zu den Blockkanten verlaufenden und den mittleren Profilblock und den Schulterblock durchquerenden Einschnitt versehen ist,
wobei in den Pitches mit der größten Umfangslänge die Einschnitte entlang der Blockmittelinien verlaufen,
wobei die in den Pitches sonstiger Umfangslänge(n) die in den mittleren Profilblöcken verlaufenden Einschnitte gegenüber der Blockmittellinie in die Abrollrichtung bei Vorwärtsfahrt und die in den Schulterblöcken verlaufenden Einschnitte gegenüber der Blockmittellinie gegen die Abrollrichtung bei Vorwärtsfahrt versetzt sind.

Durch die Einschnitte weisen die Profilblöcke jeweils einen beim Abrollen bei Vorwärtsfahrt zuerst in den Untergrund eintretenden vorderen Blockteil und einen rückwärtigen Blockteil auf. Mittlere Profilblöcke in Pitches, welche eine geringere Umfangslänge als die größte Umfangslänge aufweisen, weisen erfindungsgemäß daher einen etwas schmäleren vorderen Blockteil und einen etwas breiteren und damit steiferen rückwärtigen Blockteil auf. Unter Traktion werden die mittleren Profilblöcke entgegengesetzt zur Abrollrichtung verformt, wodurch der vordere Blockteil auf den rückwärtigen etwas steiferen Blockteil gedrückt wird und sich an diesem derart abstützt. Der steifere rückwärtige Blockteil wirkt daher der Verformung des vorderen etwas weicheren Blockteils entgegen, sodass der gesamte mittlere Profilblock gleichstark verkippt. Dadurch ist der mittlere Bereich des Laufstreifens insbesondere hinsichtlich der Traktionseigenschaften optimiert. Zusätzlich wird durch die erfindungsgemäßen Maßnahmen der Abrieb der mittleren Profiblöcke vergleichmäßigt. Schulterblöcke in Pitches, welche eine geringere Umfangslänge als die größte Umfangslänge aufweisen, weisen erfindungsgemäß einen etwas breiteren vorderen Blockteil und einen etwas schmäleren rückwärtigen Blockteil auf. Über einen Teil ihrer Quererstreckung befinden sich Schulterblöcke beim Geradeausfahren außerhalb der Bodenaufstandsfläche, treten also mit der Fahrbahn nicht in Kontakt. Beim Bremsen verbreitert sich die Bodenaufstandsfläche der an der Vorderachse befindlichen Reifen aufgrund der Achslastverlagerung, wodurch größere Teile der Schulterblöcke mit der Fahrbahn in Kontakt treten. Die Bremskräfte wirken verstärkt auf die rückwärtigen Blockteile, welche sich bei Schulterblöcken an den steiferen vorderen Blockteilen abstützen. Die Schulterblöcke reiben daher beim Bremsen besonders gleichmäßig ab. Profilblöcke und Schulterblöcke erfindungsgemäßer Laufstreifen weisen daher ein für die Bremseigenschaften und das Traktionsverhalten nahezu ideales Kippverhalten auf, welches einen gleichmäßigen Laufstreifenabrieb zur Folge hat.

Im Hinblick auf Erzielung die beschriebenen Effekte ist es zusätzlich von Vorteil, wenn gemäß einer bevorzugten Ausführungsvariante in den Pitches mit der kleinsten Umfangslänge die in den mittleren Profilblöcken verlaufenden Einschnitte zur einlaufenden Blockkante und die in den Schulterblöcken verlaufenden Einschnitte zur auslaufenden Blockkante einen senkreckt zu den Einschnittmittellinien ermittelten Abstand von 47,5% +/- 0,3% der Blockbreite aufweisen.

Bei einem Fahrzeugluftreifen, dessen Laufstreifen Pitches mit drei unterschiedlichen Umfangslängen aufweist, ist es im Hinblick auf die Erzielung obiger Effekte ferner von Vorteil, wenn die in den Pitches mit der mittleren Umfangslänge in den mittleren Profilblöcken verlaufenden Einschnitte zur einlaufenden Blockkante und die in den Schulterblöcken verlaufenden Einschnitte zur auslaufenden Blockkante einen senkreckt zu den Einschnittmittellinien ermittelten Abstand von 48,8% +/- 0,3% der Blockbreite aufweisen.

Gemäß einer weiteren bevorzugten Ausführungsvariante ist vorgesehen, dass die in den Schulterblöcken von längeren Pitches verlaufenden Einschnitte breiter sind als die in den Schulterblöcken von kürzeren Pitches verlaufenden Einschnitte. Mit dieser Maßnahme wird die Umfangsteifigkeit der unterschiedlich langen Schulterblöcke aneinander angeglichen, wodurch die Schulterblöcke besonders gleichmäßig abreiben.

In diesem Zusammenhang ist es ferner von Vorteil, wenn die in den Schulterblöcken von Pitches mit der größten Umfangslänge verlaufenden Einschnitte an der Laufstreifenperipherie eine Breite von 1,0 mm +/- 0,05 mm aufweisen. Ebenfalls von Vorteil ist es, wenn die in den Schulterblöcken von Pitches mit der geringsten Umfangslänge verlaufenden Einschnitte an der Laufstreifenperipherie eine Breite von 0,6 mm +/- 0,05 mm aufweisen.

Bei einem Fahrzeugluftreifen, dessen Laufstreifen Pitches mit drei unterschiedlichen Umfangslängen aufweist, ist es für einen besonders gleichmäßigen Abrieb der Schulterblöcke von Vorteil, wenn die in den Schulterblöcken von Pitches mit der mittleren Umfangslänge verlaufenden Einschnitte an der Laufstreifenperipherie eine Breite von 0,8 mm +/- 0,05 mm aufweisen.

Gemäß einer weiteren bevorzugten Ausführungsvariante sind die in den Schulterblöcken von längeren Pitches verlaufenden Einschnitte tiefer als die in den Schulterblöcken von kürzeren Pitches verlaufenden Einschnitte. Je tiefer die Einschnitte in die Schulterblöcke sind, desto geringer ist deren Umfangssteifigkeit. Mit dieser Maßnahme wird daher die Umfangsteifigkeit der Schulterblöcke weiter aneinander angeglichen, was zur Vergleichmäßigung des Abriebes der Schulterblöcke beiträgt.

In diesem Zusammenhang ist es ferner von Vorteil, wenn die in den Schulterblöcken von Pitches mit der größten Umfangslänge verlaufenden Einschnitte in radialer Richtung bis in eine Tiefe reichen, welche um 1,1 mm +/- 0,05 mm, insbesondere um 1,1 mm +/- 0,03 mm, geringer ist als die Profiltiefe. Ebenfalls von Vorteil ist es, wenn die in den Schulterblöcken von Pitches mit der geringsten Umfangslänge verlaufenden Einschnitte in radialer Richtung bis in eine Tiefe reichen, welche um 1,3 mm +/- 0,05mm, insbesondere um 1,1 mm +/-0,03 mm, geringer ist als die Profiltiefe.

Bei einem Fahrzeugluftreifen, dessen Laufstreifen Pitches mit drei unterschiedlichen Umfangslängen aufweist, ist es ferner vorteilhaft, wenn die in den Schulterblöcken von Pitches mit der mittleren Umfangslänge verlaufenden Einschnitte in radialer Richtung bis in eine Tiefe reichen, welche um 1,2 mm +/- 0,05 mm, insbesondere um 1,2 mm +/- 0,03 mm, geringer ist als die Profiltiefe.

Die in den mittleren Profilblöcken verlaufenden Einschnitte weisen an der Laufstreifenperipherie vorzugsweise eine konstante Breite von 0,2 mm bis 0,6 mm auf, diese Einschnitte weisen vorzugsweise ferner an ihrer tiefsten Stelle eine Tiefe von höchstens 80% der Profiltiefe auf.

Weitere Merkmale, Vorteile und Einzelheiten der Erfindung werden nun anhand der Zeichnung, die eine Ausführungsvariante der Erfindung darstellt, näher erläutert. Dabei zeigen
Fig. 1 eine schematische Draufsicht auf eine Teilabwicklung eines Laufstreifens eines Fahrzeugluftreifens mit einer Ausführungsvariante der Erfindung und
Fig. 2 einen Schnitt entlang der Linie II-II der Fig. 1.

Erfindungsgemäß ausgeführte Fahrzeugluftreifen sind insbesondere Reifen in Radialbauart für PKWs, Vans oder Light-Trucks, welche für den ganzjährigen Einsatz geeignet sind.

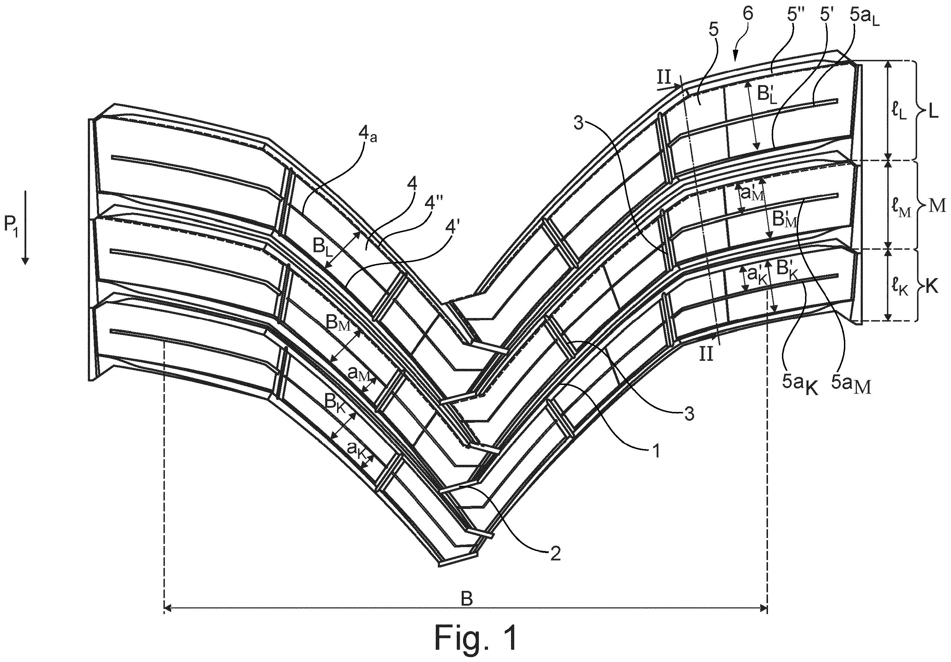

Der in Fig. 1 gezeigte Laufstreifen weist in jeder Laufstreifenhälfte parallel zueinander und in Draufsicht vorzugsweise leicht gebogen verlaufende Schrägrillen 1 auf, welche die Hauptrillen des Laufstreifens sind, zumindest über einen Großteil ihrer Erstreckung auf Profiltiefe ausgeführt sind, sich von der Laufstreifenmitte bis zu den Laufstreifenrändern erstrecken und dem Laufstreifen in Draufsicht ein gepfeiltes Profil verleihen. Die Abrollrichtung des Reifens bei Vorwärtsfahrt ist durch den Pfeil P₁ angedeutet und derart, dass die Schrägrillen 1 bei Vorwärtsfahrt zuerst mit ihren laufstreifeninnenseitigen Enden in die Bodenaufstandsfläche eintreten. Die Breite der Bodenaufstandsfläche ist in Fig. 1 mit B bezeichnet, wobei die Bodenaufstandsfläche des Laufstreifens einem statisch ermittelten Footprint (Last bei 70 % der maximalen Tragfähigkeit bei einem entsprechenden Innendruck nach ETRTO-Norm) entspricht.

Der Laufstreifen ist gemäß einem Verfahren der Pitchlängenvariation geräuschoptimiert und setzt sich aus in Umfangsrichtung aufeinanderfolgenden Pitches (gleichartig gestaltete Profilabschnitte) zusammen, wobei bei dem gezeigten Ausführungsbeispiel Pitches L, M, K mit drei unterschiedlichen Umfangslängen l_{L}, l_{M}, l_{K} vorgesehen sind. In Fig. 1 ist beispielhaft eine Aufeinanderfolge eines Pitches L mit der größten Umfangslänge l_{L}, eines Pitches M mit der Umfangslänge l_{M} und eines Pitches K mit der kleinsten Umfangslänge l_{K} vorgesehen. Die Pitches L, M, K werden über den Laufstreifenumfang innerhalb einer sogenannten Pitchfolge, die üblicherweise rechnerisch ermittelt wird, angeordnet. Das Verhältnis der drei Umfangslängen l_{L} : l_{M} : l_{K} ist im üblichen Bereich gewählt und beträgt beispielsweise 1,4 : 1,2 : 1.

Jedes Pitch L, M, K umfasst einen in Draufsicht im Wesentlichen V-förmigen Profilabschnitt, welcher sich aus je einer Schrägrille 1 aus jeder der beiden Laufstreifenhälften und der an diese in Umfangsrichtung anschließenden Profilstruktur zusammensetzt. Zur Veranschaulichung sind in Fig. 1 die Pitchgrenzen des Pitches L strichliert eingezeichnet.

Die in unterschiedlichen Laufstreifenhälften verlaufenden Schrägrillen 1 sind in Umfangsrichtung um die Hälfte der Umfangslängen l_{L}, l_{M}, l_{K} des jeweiligen Pitches L, M, K versetzt, laufen laufstreifeninnenseitig geringfügig über die Reifenäquatorialebene hinaus und enden dort in einem Abstand vor der jeweils in der anderen Laufstreifenhälfte verlaufenden Schrägrille 1. An das laufstreifeninnenseitige Ende jeder Schrägrille 1 schließt eine schmale und seichte Rille 2 an, welche in die jeweilige in der anderen Laufstreifenhälfte verlaufende Schrägrille 1 einmündet. In jeder Laufstreifenhälfte verlaufen ferner zwischen in Umfangsrichtung benachbarten Schrägrillen 1 jeweils zwei Umfangsrillen 3. Die weiter laufstreifenaußenseitig verlaufenden Umfangsrillen 3 verlaufen in Draufsicht unter einem von der Umfangsrichtung um bis zu 10° abweichenden Winkel oder in Umfangsrichtung, die weiter laufstreifeninnenseitig verlaufenden Umfangsrillen 3 verlaufen unter einem von der Umfangsrichtung um 10° bis 40° abweichenden Winkel.

Die Schrägrillen 1 und die Umfangsrillen 3 gliedern den Laufstreifen in mittlere Profilblöcke 4 und in zu Schulterblockreihen 6 gehörende Schulterblöcke 5, wobei entsprechend der beschriebenen Ausgestaltung in jeder Laufstreifenhälfte zwischen in Umfangsrichtung benachbarten Schrägrillen 1 jeweils zwei mittlere Profilblöcke 4 ausgebildet sind. Die Schrägrillen 1 erstrecken sich in jenem Bereich, in welchem sie die mittleren Profilblöcke 4 voneinander trennen, in Draufsicht zumindest über den Großteil ihrer Erstreckung unter einem Winkel von bis zu 50° zur Umfangsrichtung. In den Schulterblockreihen 6 erstrecken sich die Schrägrillen 1 in Draufsicht in Querrichtung oder, wie in Fig. 1 gezeigt, unter einem von der Querrichtung um bis zu 30°, insbesondere um bis zu 20°, abweichenden Winkel.

Jeder mittlere Profilblock 4 und jeder Schulterblock 5 ist an der Laufstreifenperipherie an den Schrägrillen 1 von einer beim Abrollen des Reifens bei Vorwärtsfahrt zuerst in den Untergrund eintretenden einlaufenden Blockkante 4', 5' und von einer auslaufenden Blockkante 4", 5" begrenzt, wobei die Blockkanten 4', 4", 5', 5" jedes mittleren Profilblockes 4 und jedes Schulterblockes 5 in Draufsicht parallel zueinander oder im Wesentlichen parallel zueinander verlaufen. Die in den unterschiedlichen Pitches L, M, K befindlichen Profilblöcke 4 weisen eine senkrecht zu ihren Blockkanten 4', 4" ermittelte Blockbreite B_{L}, B_{M}, B_{K} auf. Die Schulterblöcke 5 aus den unterschiedlichen Pitches L, M, K weisen eine senkrecht zu ihren Blockkanten 5', 5" ermittelte Blockbreite B_{L}', B_{M}', B_{K}' auf. Die Blockbreiten B_{L}, B_{M}, B_{K}, B_{L}', B_{M}', B_{K}' variieren entsprechend den Umfangslängen l_{L}, l_{M}, l_{K} der Pitches L, M, K.

Die mittleren Profilblöcke 4 sind jeweils mit einem einzigen Einschnitt 4a versehen, welcher den jeweiligen Profilblock 4 durchquert und sich parallel zu dessen Blockkanten 4', 4" erstreckt, wobei jeder Einschnitt 4a an der Laufstreifenperipherie eine konstante Breite von 0,2 mm bis 0,6 mm sowie ferner an seiner tiefsten Stelle eine Tiefe von höchstens 80% der Profiltiefe aufweist. Die Einschnitte 4a können über ihre gesamte Erstreckung eine konstante Tiefe aufweisen, weisen bevorzugter Weise jedoch an den Einmündungsbereichen zu den Umfangsrillen 3 bzw. den Schrägrillen 1 eine geringere Tiefe auf. In den zu Pitches L gehörenden mittleren Profilblöcken 4 verlaufen die Einschnitte 4a mittig entlang der parallel zu den Blockkanten 4', 4" verlaufenden Blockmittellinien der Profilblöcke 4. In den mittleren Profilblöcken 4 von Pitches M ausgebildete Einschnitte 4a weisen von ihrer Einschnittmittellinie zur einlaufenden Blockkante 4' einen Abstand a_{M} von 48,8% +/- 0,3% der Blockbreite B_{M} des Profilblockes 4 im Pitch M auf. In den mittleren Profilblöcken 4 von Pitches K vorgesehene Einschnitte 4a sind derart ausgebildet, dass die Einschnittmittellinie der Einschnitte 4a zur einlaufenden Blockkante 4' einen Abstand a_{K} von 47,5% +/- 0,3% der Blockbreite B_{K} eines Profilblockes 4 im Pitch K aufweist.

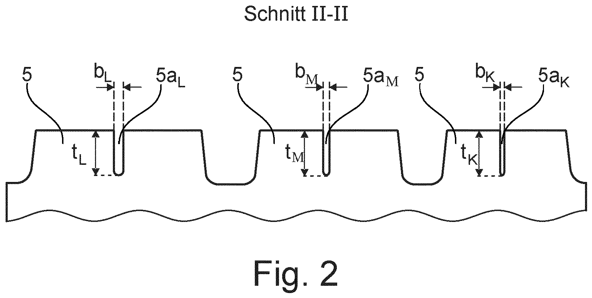

Die in unterschiedlichen Pitches L, M, K befindlichen Schulterblöcke 5 sind jeweils mit einem Einschnitt 5a_{L}, 5a_{M}, 5a_{K} versehen, welcher innerhalb der Bodenaufstandsflächenbreite B eine konstante Tiefe t_{L}, t_{M}, t_{K} aufweist (Fig. 2) und zur Laufstreifenaußenseite insbesondere in an sich bekannter Weise ausläuft. Die Einschnitte 5a_{L} in den Schulterblöcken 5 von Pitches L verlaufen entlang der parallel zu den Bockkanten 5', 5" verlaufenden Blockmittellinien der Schulterblöcke 5. Wie Fig. 2 zeigt, weist der Einschnitt 5a_{L} an der Laufstreifenperipherie eine Breite b_{L} von 1,0 mm +/- 0,05 mm auf und reicht in radialer Richtung bis in die bereits erwähnte Tiefe t_{L}, welche um 1,1 mm +/- 0,05 mm, insbesondere um 1,1 mm +/- 0,03 mm, geringer ist als die Profiltiefe. Die Einschnitte 5a_{M} in den Schulterblöcken 5 von Pitches M sind derart angeordnet, dass jede Einschnittmittelinie zur auslaufenden Blockkante 5" einen Abstand a_{M}' (Fig. 1) aufweist, welcher 48,8% +/- 0,3% der Blockbreite B_{M}' eines Profilblockes 5 im Pitch M beträgt. Gemäß Fig. 2 weist der Einschnitt 5a_{M} an der Laufstreifenperipherie eine Breite b_{M} von 0,8 mm +/- 0,05 mm auf und reicht in radialer Richtung bis in die Tiefe t_{M}, welche um 1,2 mm +/- 0,05 mm, insbesondere um 1,2 mm +/- 0,03 mm, geringer ist als die jeweils vorgesehene maximale Profiltiefe. Die Einschnitte 5a_{K} in den Schulterblöcken 5 von Pitches K sind derart in den Schulterblöcken 5 ausgebildet, dass sie bezogen auf ihre Einschnittmittellinien zur auslaufenden Blockkante 5" einen Abstand a_{K}' (Fig. 1) von 47,5% +/- 0,3% der Blockbreite B_{K}' eines Schulterblockes 5 im Pitch K aufweisen. Jeder Einschnitt 5a_{K} weist an der Laufstreifenperipherie eine Breite b_{K} von 0,6 mm +/- 0,05 mm auf und reicht in radialer Richtung bis in die Tiefe t_{K}, welche um 1,3 mm +/ 0,05 mm, insbesondere 1,3 mm +/0,03 mm, geringer ist als die jeweils vorgesehene maximale Profiltiefe (Fig. 2).

Gemäß einer bevorzugten Ausführungsvariante weisen die Umfangsrillen 3 in radialer Richtung eine Tiefe von höchstens 60%, insbesondere von höchstens 30%, und besonderes bevorzugter Weise von 50% der Profiltiefe auf, sodass die in jeder Laufstreifenhälfte zwischen in Umfangsrichtung benachbarten Schrägrillen 1 befindlichen Profilblöcke 4 und Schulterblöcke 5 aneinander angebunden sind. Jede Umfangsrille 3 kann ferner an ihrem Rillengrund mit einem Einschnitt versehen sein, welcher gemeinsam mit der jeweiligen Umfangsrille 3 in die Schrägrillen 1 einmündet (Fig. 1).

### Bezugszeichenliste

- 1 ........................: Schrägrille
- 2 ........................: Rille
- 3 ........................: Umfangsrille
- 4 ........................: mittlerer Profilblock
- 4a ......................: Einschnitt
- 4', 4" ................: Blockkante
- 5 ........................: Schulterblock
- 5a_{L} 5a_{M} , 5a_{K}........: Einschnitt
- 5',5" .................: Blockkante
- 6 ........................: Schulterblockreihe
- a_{M}, a_{K}.................: Abstand
- a_{M}', a_{K}' ..............: Abstand
- b_{L}, b_{M}, b_{K}...........: Breite
- B_{L}, B_{M}, B_{K}.........: Blockbreite
- B_{L}', B_{M}', B_{K}' .....: Blockbreite
- l_{L}, l_{M}, l_{K} .............: Länge
- t_{L}, t_{M}, t_{K} .............: Tiefe
- L, M, K..............: Pitch
- P₁.................: Abrollrichtung

## Patentansprüche

1. Fahrzeugluftreifen mit einem laufrichtungsgebunden ausgeführten Laufstreifen mit mittleren Profilblöcken (4) im Laufstreifenmittelbereich und mit Schulterblöcken (5), welche Blöcke (4, 5) in Umfangsrichtung von über die Laufstreifenbreite V-förmig zueinander verlaufenden Schrägrillen (1) begrenzt sind, welche mit den in Umfangsrichtung an sie angrenzenden mittleren Profilblöcken (4) und Schulterblöcken (5) jeweils einen Pitch (L, M, K) bilden, wobei Pitches (L, M, K) mit zumindest zwei unterschiedlichen Umfangslängen (l_{L}, l_{M}, l_{K}) vorgesehen sind, wobei die mittleren Profilblöcke (4) und die Schulterblöcke (5) an der Laufstreifenperipherie zu den Schrägrillen (1) jeweils durch zwei parallel zueinander verlaufende Blockkanten (4', 4", 5', 5") begrenzt sind und wobei die mittleren Profilblöcke (4) und die Schulterblöcke (5) mit Einschnitten (4a, 5a_{L}, 5a_{M}, 5a_{K}) versehen sind, wobei jeder mittlere Profilblock (4) und jeder Schulterblock (5) mit genau einem in Draufsicht parallel zu den Blockkanten (4', 4", 5', 5") verlaufenden und den mittleren Profilblock (4) und den Schulterblock (5) durchquerenden Einschnitt (4a, 5a_{L}, 5a_{M}, 5a_{K}) versehen ist,
**dadurch gekennzeichnet,**
**dass** in den Pitches (L) mit der größten Umfangslänge (l_{L}) die Einschnitte (4a, 5a_{L}) entlang der Blockmittelinien verlaufen,
wobei in den Pitches (M, K) sonstiger Umfangslänge(n) die in den mittleren Profilblöcken (4) verlaufenden Einschnitte (4a) gegenüber der Blockmittellinie in die Abrollrichtung (P₁) bei Vorwärtsfahrt und die in den Schulterblöcken (5) verlaufenden Einschnitte (5a_{M}, 5a_{K}) gegenüber der Blockmittellinie gegen die Abrollrichtung (P₁) bei Vorwärtsfahrt versetzt sind.

2. Fahrzeugluftreifen nach Anspruch 1, **dadurch gekennzeichnet, dass** in den Pitches (K) mit der kleinsten Umfangslänge (l_{K}) die in den mittleren Profilblöcken (4) verlaufenden Einschnitte (4a) zur einlaufenden Blockkante (4') und die in den Schulterblöcken (5) verlaufenden Einschnitte (5a_{K}) zur auslaufenden Blockkante (5") einen senkreckt zu den Einschnittmittellinien ermittelten Abstand (a_{K}, a_{K}') von 47,5% +/- 0,3% der Blockbreite (B_{K}, B_{K}') aufweisen.

3. Fahrzeugluftreifen nach Anspruch 1 oder 2, dessen Laufstreifen Pitches (L, M, K) mit drei unterschiedlichen Umfangslängen (l_{L}, l_{M}, l_{K}) aufweist, **dadurch gekennzeichnet, dass** die in den Pitches (M) mit der mittleren Umfangslänge (l_{M}) in den mittleren Profilblöcken (4) verlaufenden Einschnitte (4a) zur einlaufenden Blockkante (4') und die in den Schulterblöcken (5) verlaufenden Einschnitte (5a_{M}) zur auslaufenden Blockkante (5") einen senkreckt zu den Einschnittmittellinien ermittelten Abstand (a_{M}, a_{M}') von 48,8% +/- 0,3% der Blockbreite (B_{M}, B_{M}') aufweisen.

4. Fahrzeugluftreifen nach einem der Ansprüche 1 bis 3, **dadurch gekennzeichnet, dass** die in den Schulterblöcken (5) von längeren Pitches (L, M) verlaufenden Einschnitte (5a_{L}, 5a_{M}) breiter sind als die in den Schulterblöcken (5) von kürzeren Pitches (M, K) verlaufenden Einschnitte (5a_{L}, 5a_{M}).

5. Fahrzeugluftreifen nach einem der Ansprüche 1 bis 4, **dadurch gekennzeichnet, dass** die in den Schulterblöcken (5) von Pitches (L) mit der größten Umfangslänge (l_{L}) verlaufenden Einschnitte (5a_{L}) an der Laufstreifenperipherie eine Breite (b_{L}) von 1,0 mm +/- 0,05 mm aufweisen.

6. Fahrzeugluftreifen nach einem der Ansprüche 1 bis 5, **dadurch gekennzeichnet, dass** die in den Schulterblöcken (5) von Pitches (K) mit der geringsten Umfangslänge (l_{K}) verlaufenden Einschnitte (5a_{K}) an der Laufstreifenperipherie eine Breite (b_{K}) von 0,6 mm +/- 0,05 mm aufweisen.

7. Fahrzeugluftreifen nach einem der Ansprüche 1 bis 5, dessen Laufstreifen Pitches (L, M, K) mit drei unterschiedlichen Umfangslängen (l_{L}, l_{M}, l_{K}) aufweist, **dadurch gekennzeichnet, dass** die in den Schulterblöcken (5) von Pitches (M) mit der mittleren Umfangslänge (l_{M}) verlaufenden Einschnitte (5a_{M}) an der Laufstreifenperipherie eine Breite (b_{M}) von 0,8 mm +/- 0,05 mm aufweisen.

8. Fahrzeugluftreifen nach einem der Ansprüche 1 bis 7, **dadurch gekennzeichnet, dass** die in den Schulterblöcken (5) von längeren Pitches (L, M) verlaufenden Einschnitte (5a_{L}, 5a_{M}) tiefer sind als die in den Schulterblöcken (5) von kürzeren Pitches (M, K) verlaufenden Einschnitte (5a_{M}, 5a_{K})

9. Fahrzeugluftreifen nach Anspruch 8, **dadurch gekennzeichnet, dass** die in den Schulterblöcken (5) von Pitches (L) mit der größten Umfangslänge (l_{L}) verlaufenden Einschnitte (5a_{L}) in radialer Richtung bis in eine Tiefe (t_{L}) reichen, welche um 1,1 mm +/- 0,05 mm, insbesondere um 1,1 mm +/- 0,03 mm, geringer ist als die Profiltiefe.

10. Fahrzeugluftreifen nach Anspruch 8, **dadurch gekennzeichnet, dass** die in den Schulterblöcken (5) von Pitches (K) mit der geringsten Umfangslänge (l_{K}) verlaufenden Einschnitte (5a_{K}) in radialer Richtung bis in eine Tiefe (t_{K}) reichen, welche um 1,3 mm +/- 0,05mm, insbesondere um 1,1 mm +/- 0,03 mm, geringer ist als die Profiltiefe.

11. Fahrzeugluftreifen nach einem der Ansprüche 1 bis 10, dessen Laufstreifen Pitches (L, M, K) mit drei unterschiedlichen Umfangslängen (l_{L}, l_{M}, l_{K}) aufweist, **dadurch gekennzeichnet, dass** die in den Schulterblöcken (5) von Pitches (M) mit der mittleren Umfangslänge (l_{M}) verlaufenden Einschnitte (5a_{M}) in radialer Richtung bis in eine Tiefe (t_{M}) reichen, welche um 1,2 mm +/- 0,05 mm, insbesondere um 1,2 mm +/- 0,03 mm, geringer ist als die Profiltiefe.

12. Fahrzeugluftreifen nach einem der Ansprüche 1 bis 11, **dadurch gekennzeichnet, dass** die in den mittleren Profilblöcken (4) verlaufenden Einschnitte (4a) an der Laufstreifenperipherie eine konstante Breite von 0,2 mm bis 0,6 mm aufweisen.

13. Fahrzeugluftreifen nach einem der Ansprüche 1 bis 12,
**dadurch gekennzeichnet,**
**dass** die in den mittleren Profilblöcken (4) verlaufenden Einschnitte (4a) an ihrer tiefsten Stelle eine Tiefe von höchstens 80% der Profiltiefe aufweisen.

## Claims

1. Pneumatic vehicle tyre comprising a tread of a directional configuration with middle profile blocks (4) in the middle region of the tread and with shoulder blocks (5), which blocks (4, 5) are delimited in the circumferential direction by oblique grooves (1), which extend in a V-shaped manner in relation to one another over the tread width and respectively form a pitch (L, M, K) with the middle profile blocks (4) and shoulder blocks (5) adjoining them in the circumferential direction, wherein pitches (L, M, K) with at least two different circumferential lengths (l_{L}, l_{M}, l_{K}) are provided, wherein the middle profile blocks (4) and the shoulder blocks (5) are respectively delimited at the periphery of the tread in relation to the oblique grooves (1) by two block edges (4', 4", 5', 5") extending parallel to one another, and wherein the middle profile blocks (4) and the shoulder blocks (5) are provided with sipes (4a, 5a_{L}, 5a_{M}, 5a_{K}), wherein each middle profile block (4) and each shoulder block (5) is provided with exactly one sipe (4a, 5a_{L}, 5a_{M}, 5a_{K}), which in plan view extends parallel to the block edges (4', 4", 5', 5") and crosses the middle profile block (4) and the shoulder block (5), **characterized**
**in that**, in the pitches (L) with the greatest circumferential length (l_{L}), the sipes (4a, 5a_{L}) extend along the block centre lines,
wherein, in the pitches (M, K) of other circumferential length(s), the sipes (4a) extending in the middle profile blocks (4) are offset with respect to the block centre line in the rolling direction (P₁) during forward travel and the sipes (5a_{M}, 5a_{K}) extending in the shoulder blocks (5) are offset with respect to the block centre line counter to the rolling direction (P₁) during forward travel.

2. Pneumatic vehicle tyre according to Claim 1, **characterized in that**, in the pitches (K) with the smallest circumferential length (l_{K}), the sipes (4a) extending in the middle profile blocks (4) are at a distance (a_{K}) from the leading block edge (4') and the sipes (5a_{K}) extending in the shoulder blocks (5) are at a distance (a_{K}') from the trailing block edge (5"), determined perpendicularly to the centre lines of the sipes, of 47.5% +/- 0.3% of the block width (B_{K}, B_{K}').

3. Pneumatic vehicle tyre according to Claim 1 or 2, the tread of which has pitches (L, M, K) with three different circumferential lengths (l_{L}, l_{M}, l_{K}), **characterized in that**, in the pitches (M) with the middle circumferential length (l_{M}), the sipes (4a) extending in the middle profile blocks (4) are at a distance (a_{M}) from the leading block edge (4') and the sipes (5a_{M}) extending in the shoulder blocks (5) are at a distance (a_{M}') from the trailing block edge (5"), determined perpendicularly to the centre lines of the sipes, of 48.8% +/- 0.3% of the block width (B_{M}, B_{M}').

4. Pneumatic vehicle tyre according to one of Claims 1 to 3, **characterized in that** the sipes (5a_{L}, 5a_{M}) extending in the shoulder blocks (5) of longer pitches (L, M) are wider than the sipes (5a_{L}, 5a_{M}) extending in the shoulder blocks (5) of shorter pitches (M, K).

5. Pneumatic vehicle tyre according to one of Claims 1 to 4, **characterized in that** the sipes (5a_{L}) extending in the shoulder blocks (5) of pitches (L) with the greatest circumferential length (l_{L}) have at the periphery of the tread a width (b_{L}) of 1.0 mm +/-0.05 mm.

6. Pneumatic vehicle tyre according to one of Claims 1 to 5, **characterized in that** the sipes (5a_{K}) extending in the shoulder blocks (5) of pitches (K) with the smallest circumferential length (l_{K}) have at the periphery of the tread a width (b_{K}) of 0.6 mm +/-0.05 mm.

7. Pneumatic vehicle tyre according to one of Claims 1 to 5, the tread of which has pitches (L, M, K) with three different circumferential lengths (l_{L}, l_{M}, l_{K}), **characterized in that** the sipes (5a_{M}) extending in the shoulder blocks (5) of pitches (M) with the middle circumferential length (l_{M}) have at the periphery of the tread a width (b_{M}) of 0.8 mm +/- 0.05 mm.

8. Pneumatic vehicle tyre according to one of Claims 1 to 7, **characterized in that** the sipes (5a_{L}, 5a_{M}) extending in the shoulder blocks (5) of longer pitches (L, M) are deeper than the sipes (5a_{M}, 5a_{K}) extending in the shoulder blocks (5) of shorter pitches (M, K).

9. Pneumatic vehicle tyre according to Claim 8, **characterized in that** the sipes (5a_{L}) extending in the shoulder blocks (5) of pitches (L) with the greatest circumferential length (l_{L}) reach in the radial direction to a depth (t_{L}) which is smaller than the profile depth by 1.1 mm +/- 0.05 mm, in particular by 1.1 mm +/- 0.03 mm.

10. Pneumatic vehicle tyre according to Claim 8, **characterized in that** the sipes (5a_{K}) extending in the shoulder blocks (5) of pitches (K) with the shortest circumferential length (l_{K}) reach in the radial direction to a depth (t_{K}) which is smaller than the profile depth by 1.3 mm +/- 0.05 mm, in particular by 1.1 mm +/- 0.03 mm.

11. Pneumatic vehicle tyre according to one of Claims 1 to 10, the tread of which has pitches (L, M, K) with three different circumferential lengths (l_{L}, l_{M}, l_{K}), **characterized in that** the sipes (5a_{M}) extending in the shoulder blocks (5) of pitches (M) with the middle circumferential length (l_{M}) reach in the radial direction to a depth (t_{M}) which is smaller than the profile depth by 1.2 mm +/- 0.05 mm, in particular by 1.2 mm +/- 0.03 mm.

12. Pneumatic vehicle tyre according to one of Claims 1 to 11, **characterized in that** the sipes (4a) extending in the middle profile blocks (4) have at the periphery of the tread a constant width of 0.2 mm to 0.6 mm.

13. Pneumatic vehicle tyre according to one of Claims 1 to 12, **characterized in that** the sipes (4a) extending in the middle profile blocks (4) have at the deepest point a depth of at most 80% of the profile depth.

## Revendications

1. Pneumatique de véhicule doté d'une bande de roulement réalisée de manière directionnelle comportant des blocs profilés centraux (4) dans la région centrale de bande de roulement et des blocs d'épaulement (5), lesquels blocs (4, 5) sont limités dans la direction périphérique par des rainures obliques (1) s'étendant en forme de V les unes par rapport aux autres sur la largeur de bande de roulement, lesquelles forment respectivement un pas (L, M, K) avec les blocs profilés centraux (4) adjacents à celles-ci dans la direction périphérique et les blocs d'épaulement (5), des pas (L, M, K) présentant au moins deux longueurs périphériques différentes (l_{L}, l_{M}, l_{K}) étant prévus, les blocs profilés centraux (4) et les blocs d'épaulement (5) étant délimités respectivement par deux bords de bloc (4', 4", 5', 5") s'étendant parallèlement l'un à l'autre à la périphérie de bande de roulement par rapport aux rainures obliques (1) et les blocs profilés centraux (4) et les blocs d'épaulement (5) étant pourvus d'entailles (4a, 5a_{L}, 5a_{M}, 5a_{K}), chaque bloc profilé central (4) et chaque bloc d'épaulement (5) étant doté exactement d'une entaille (4a, 5a_{L}, 5a_{M}, 5a_{K}) s'étendant parallèlement aux bords de bloc (4', 4", 5', 5") en vue de dessus et traversant le bloc profilé central (4) et le bloc d'épaulement (5),
**caractérisé en ce que**,
dans les pas (L) présentant la plus grande longueur périphérique (l_{L}), les entailles (4a, 5a_{L}) s'étendent le long des lignes centrales de bloc,
et dans les pas (M, K) présentant une/des autre(s) longueur(s) périphérique(s), les entailles (4a) s'étendant dans les blocs profilés centraux (4) étant décalées par rapport à la ligne centrale de bloc dans le sens de roulement (P₁) en cas de marche avant et les entailles (5a_{M}, 5a_{K}) s'étendant dans les blocs d'épaulement (5) étant décalées par rapport à la ligne centrale de bloc en sens inverse du sens de roulement (P₁) en cas de marche avant.

2. Pneumatique de véhicule selon la revendication 1, **caractérisé en ce que**, dans les pas (K) de plus petite longueur périphérique (l_{K}), les entailles (4a) s'étendant dans les blocs profilés centraux (4) présentent, par rapport au bord de bloc d'entrée (4'), et les entailles (5a_{K}) s'étendant dans les blocs d'épaulement (5) présentent, par rapport au bord de bloc de sortie (5"), une distance (a_{K}, a_{K}'), déterminée perpendiculairement aux lignes centrales d'entailles, de 47,5% +/- 0,3% de la largeur de bloc (B_{K}, B_{K}').

3. Pneumatique de véhicule selon la revendication 1 ou 2, dont la bande de roulement comprend des pas (L, M, K) présentant trois longueurs périphériques différentes (l_{L}, l_{M}, l_{K}), **caractérisé en ce que** les entailles (4a) s'étendant dans les pas (M) de longueur périphérique moyenne (l_{M}) dans les blocs profilés centraux (4) présentent, par rapport au bord de bloc d'entrée (4'), et les entailles (5a_{M}) s'étendant dans les blocs d'épaulement (5) présentent, par rapport au bord de bloc de sortie (5"), une distance (a_{M}, a_{M}'), déterminée perpendiculairement aux lignes centrales d'entailles, de 48,8% +/- 0,3% de la largeur de bloc (B_{M}, B_{M}') .

4. Pneumatique de véhicule selon l'une des revendications 1 à 3, **caractérisé en ce que** les entailles (5a_{L}, 5a_{M}) s'étendant dans les blocs d'épaulement (5) de pas plus longs (L, M) sont plus larges que les entailles (5a_{L}, 5a_{M}) s'étendant dans les blocs d'épaulement (5) de pas plus courts (M, K).

5. Pneumatique de véhicule selon l'une des revendications 1 à 4, **caractérisé en ce que** les entailles (5a_{L}) s'étendant dans les blocs d'épaulement (5) de pas (L) de plus grande longueur périphérique (l_{L}) présentent une largeur (b_{L}) de 1,0 mm +/- 0,05 mm à la périphérie de bande de roulement.

6. Pneumatique de véhicule selon l'une des revendications 1 à 5, **caractérisé en ce que** les entailles (5a_{K}) s'étendant dans les blocs d'épaulement (5) de pas (K) de plus petite longueur périphérique (l_{K}) présentent une largeur (b_{K}) de 0,6 mm +/- 0,05 mm à la périphérie de bande de roulement.

7. Pneumatique de véhicule selon l'une des revendications 1 à 5, dont la bande de roulement comprend des pas (L, M, K) présentant trois longueurs périphériques différentes (l_{L}, l_{M}, l_{K}), **caractérisé en ce que** les entailles (5a_{M}) s'étendant dans les blocs d'épaulement (5) de pas (M) de longueur périphérique moyenne (l_{M}) présentent une largeur (b_{M}) de 0,8 mm +/-0,05 mm à la périphérie de bande de roulement.

8. Pneumatique de véhicule selon l'une des revendications 1 à 7, **caractérisé en ce que** les entailles (5a_{L}, 5a_{M}) s'étendant dans les blocs d'épaulement (5) de pas plus longs (L, M) sont plus profondes que les entailles (5a_{M}, 5a_{K}) s'étendant dans les blocs d'épaulement (5) de pas plus courts (M, K).

9. Pneumatique de véhicule selon la revendication 8, **caractérisé en ce que** les entailles (5a_{L}) s'étendant dans les blocs d'épaulement (5) de pas (L) de plus grande longueur périphérique (l_{L}) s'étendent dans la direction radiale jusqu'à une profondeur (t_{L}), laquelle est inférieure de 1,1 mm +/- 0,05 mm, en particulier de 1,1 mm +/- 0,03 mm, à la profondeur de profilé.

10. Pneumatique de véhicule selon la revendication 8, **caractérisé en ce que** les entailles (5a_{K}) s'étendant dans les blocs d'épaulement (5) de pas (K) de plus petite longueur périphérique (l_{K}) s'étendent dans la direction radiale jusqu'à une profondeur (t_{K}), laquelle est inférieure de 1,3 mm +/- 0,05 mm, en particulier de 1,1 mm +/- 0,03 mm, à la profondeur de profilé.

11. Pneumatique de véhicule selon l'une des revendications 1 à 10, dont la bande de roulement comprend des pas (L, M, K) présentant trois longueurs périphériques différentes (l_{L}, l_{M}, l_{K}), **caractérisé en ce que** les entailles (5a_{M}) s'étendant dans les blocs d'épaulement (5) de pas (M) de longueur périphérique moyenne (l_{M}) s'étendent dans la direction radiale jusqu'à une profondeur (t_{M}), laquelle est inférieure de 1,2 mm +/- 0,05 mm, en particulier de 1,2 mm +/- 0,03 mm, à la profondeur de profilé.

12. Pneumatique de véhicule selon l'une des revendications 1 à 11, **caractérisé en ce que** les entailles (4a) s'étendant dans les blocs profilés centraux (4) présentent une largeur constante de 0,2 mm à 0,6 mm à la périphérie de bande de roulement.

13. Pneumatique de véhicule selon l'une des revendications 1 à 12, **caractérisé en ce que** les entailles (4a) s'étendant dans les blocs profilés centraux (4) présentent à leur point le plus profond une profondeur d'au maximum 80% de la profondeur de profilé.
